# EUROPEAN PATENT APPLICATION

(11) **EP 4 772 856 A1**
(43) Date of publication of application: **08.07.2026**
(21) Application number: 25864564.7
(22) Date of filing: 18.09.2025
(51) Int. Cl.: G01N 15/1031, G01N 15/02, G01N 27/22, G01N 15/10

(54) **METAL PARTICLE DETECTION DEVICE AND METHOD THEREOF**

(30) Priority: 08.10.2024 KR 20240136294
(71) Applicant: LG Energy Solution, Ltd., Seoul 07335 (KR)
(72) Inventor: The designation of the inventor has not yet been filed
(74) Representative: Plasseraud IP
(86) International application number: PCT/KR2025/014564
(87) International publication number: WO 2026/079710

(57) **Abstract**

This document relates to a metal particle detection device including a first capacitance sensor configured to acquire a first capacitance value corresponding to a fluid moving in a predetermined direction on a flow path, a second capacitance sensor configured to acquire a second capacitance value corresponding to the fluid, a recovery unit positioned between the first capacitance sensor and the second capacitance sensor and configured to recover first metal particles contained in the fluid, and a processor configured to detect the first metal particles and second metal particles different from the first metal particles contained in the fluid based on the first capacitance value and the second capacitance value.

## Description

### TECHNICAL FIELD

### CROSS-REFERENCE TO RELATED APPLICATIONS

This application claims priority from Korean Patent Application No. 10-2024-0136294, filed on October 8, 2024, the disclosure of which is incorporated by reference herein.

### TECHNICAL FIELD

Embodiments disclosed in this document relate to a metal particle detection device and metal particle detection method.

### BACKGROUND ART

In recent years, secondary battery technology has made rapid progress and plays a crucial role in various industrial sectors. Secondary batteries are batteries that can be charged and discharged, and can be interpreted as including not only conventional nickelcadmium batteries, nickel-metal hydride batteries, and lead-acid batteries, but also lithium-ion batteries. In particular, lithium-ion batteries play an important role in electric vehicles (EVs), energy storage systems (ESS), and portable electronic devices.

If foreign substances, especially metal particles, enter the interior of the battery pack during the manufacturing process of a battery pack, the performance of the battery pack may be affected. If metal particles enter the battery pack, the likelihood of causing a short circuit increases, which may reduce the battery's charging and discharging efficiency or cause safety issues due to thermal runaway. Therefore, it is necessary to monitor and manage the battery manufacturing process to prevent foreign substances from entering.

### DISCLOSURE OF THE INVENTION

### TECHNICAL PROBLEM

Embodiments provide a metal particle detection device and metal particle detection method for detecting metal particles contained in a fluid on a flow path based on a capacitance value.

Embodiments provide a metal particle detection device and metal particle detection method for calculating the amount of metal particles contained in a fluid on a flow path based on a change in a capacitance value.

The technical problems of the present invention are not limited to the technical problems mentioned above, and other technical problems that are not mentioned may be clearly understood by those skilled in the art from the descriptions below.

### TECHNICAL SOLUTION

A metal particle detection device according to an embodiment of this document includes a first capacitance sensor configured to acquire a first capacitance value corresponding to a fluid moving in a predetermined direction on a flow path, a second capacitance sensor configured to acquire a second capacitance value corresponding to the fluid, a recovery unit positioned between the first capacitance sensor and the second capacitance sensor and configured to recover first metal particles contained in the fluid, and a processor configured to detect the first metal particles and second metal particles different from the first metal particles contained in the fluid based on the first capacitance value and the second capacitance value.

According to an embodiment, the processor may be configured to calculate a total count corresponding to an amount of metal particles containing the first metal particles and the second metal particles based on the first capacitance value, calculate a second count corresponding to an amount of the second metal particles based on the second capacitance value, and calculate a first count corresponding to an amount of the first metal particles based on the total count and the second count.

According to an embodiment, the processor may be configured to calculate a first standardized value and a second standardized value corresponding to the first capacitance value and the second capacitance value, respectively, the total count may be calculated based on the first standardized value, and the second count may be calculated based on the second standardized value.

According to an embodiment, the processor may be configured to calculate the number of the first metal particles based on the first count and calculate the number of the second metal particles based on the second count.

According to an embodiment, the recovery unit may include a magnet and the first metal particles may contain iron metal particles.

According to an embodiment, the metal particle detection device may further include a removal unit configured to remove the first metal particles from the recovery unit when an amount of the first metal particles exceeds a recovery threshold value.

According to an embodiment, the processor may be configured to calculate a measurement cycle for measuring the first capacitance value and the second capacitance value based on a flow rate of the fluid.

A metal particle detection device according to an embodiment of this document includes an operation of acquiring a first capacitance value corresponding to a fluid moving in a predetermined direction on a flow path, an operation of acquiring a second capacitance value corresponding to the fluid, an operation of recovering first metal particles contained in the fluid, and an operation of detecting the first metal particles and second metal particles different from the first metal particles contained in the fluid based on the first capacitance value and the second capacitance value.

According to an embodiment, the operation of detecting the first metal particles and the second metal particles may include an operation of calculating a total count corresponding to an amount of metal particles containing the first metal particles and the second metal particles based on the first capacitance value, an operation of calculating a second count corresponding to an amount of the second metal particles based on the second capacitance value, and an operation of calculating a first count corresponding to an amount of the first metal particles based on the total count and the second count.

According to an embodiment, the metal particle detection method may further include an operation of calculating a first standardized value and a second standardized value corresponding to the first capacitance value and the second capacitance value, respectively, the total count may be calculated based on the first standardized value, and the second count may be calculated based on the second standardized value.

According to an embodiment, the metal particle detection method may further include an operation of calculating the number of the first metal particles based on the first count and an operation of calculating the number of the second metal particles based on the second count.

According to an embodiment, the first metal particles may contain iron metal particles and may be recovered by a magnet.

According to an embodiment, the metal particle detection method may further include an operation of removing the first metal particles when an amount of the first metal particles exceeds a recovery threshold value.

According to an embodiment, the metal particle detection method may further include an operation of calculating a measurement cycle for measuring the first capacitance value and the second capacitance value based on a flow rate of the fluid.

### ADVANTAGEOUS EFFECTS

The present technology can detect metal particles contained in the fluid on the flow path based on the capacitance value.

In addition, the present technology can calculate the amount of metal particles contained in the fluid on the flow path based on a change in the capacitance value.

In addition, various effects that are directly or indirectly identified through this document can be provided.

### BRIEF DESCRIPTION OF THE DRAWINGS

FIG. 1 is a diagram for describing the disposition of a metal particle detection device according to an embodiment of this document.
FIG. 2 is a block diagram for describing the configuration of a metal particle detection device according to an embodiment of this document.
FIG. 3 is a diagram illustrating an application example of a metal particle detection device according to an embodiment of this document.
FIG. 4a is a diagram for describing an example of a first capacitance value according to an embodiment of this document.
FIG. 4b is a diagram for describing an example of a second capacitance value according to an embodiment of this document.
FIG. 5 and FIG. 6 are flowcharts for describing a metal particle detection method according to an embodiment of this document.

### MODE FOR CARRYING OUT THE INVENTION

Hereinafter, with reference to the accompanying drawings, this document will be described in detail so that a person with ordinary knowledge in the technical field to which this document pertains can easily implement it. However, it should be understood that the present technology may be implemented in many different forms and should be understood to include various modifications, equivalents, and/or alternatives of embodiments of the present technology.

In order to clearly describe this document, parts unrelated to the description are omitted, and the same or similar components are assigned the same reference numerals throughout the specification.

In addition, terms or words used in this specification and claims should not be interpreted as limited to ordinary or dictionary meanings, but should be interpreted as meanings and concepts that conform to the technical idea of this document based on the principle that the inventor can appropriately define the concept of the terms to describe his or her own invention in the best way.

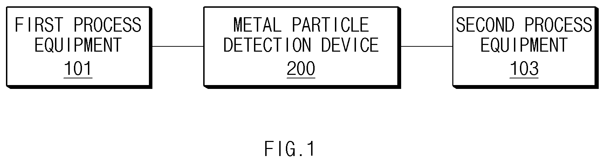

Hereinafter, embodiments of this document will be described in detail with reference to FIGS. 1 to 6.

FIG. 1 is a diagram for describing the disposition of a metal particle detection device according to an embodiment of this document.

Referring to FIG. 1, a metal particle detection device 200 according to an embodiment of this document may be disposed in a flow path between any pieces of process equipment included in a manufacturing process. Specifically, the metal particle detection device 200 may be disposed in a flow path between first process equipment 101 and second process equipment 103. Accordingly, the metal particle detection device 200 may detect metal particles contained in a fluid moving in a predetermined direction (e.g., a constant direction) on the flow path.

For example, the metal particle detection device 200 may detect metal particles contained in the fluid moving from the first process equipment 101 to the second process equipment 103 on the flow path. In addition, for example, the metal particle detection device 200 may detect metal particles contained in the fluid moving from the second process equipment 103 to the first process equipment 101 on the flow path. Here, the first process equipment 101 and the second process equipment 103 may be any pieces of process equipment included in the battery manufacturing process.

According to an embodiment, the metal particle detection device 200 may be disposed in a flow path included in the process equipment. Specifically, the metal particle detection device 200 may be disposed in a flow path included in the first process equipment 101 or a flow path included in the second process equipment 103. Accordingly, the metal particle detection device 200 may detect metal particles contained in the fluid moving in the predetermined direction on the flow path included in the first process equipment 101 or the second process equipment 103.

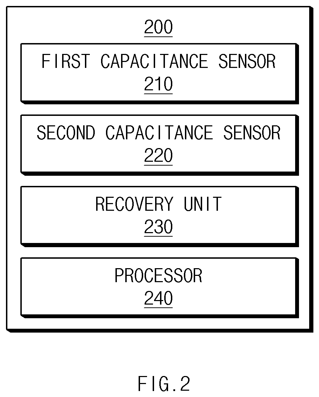

Hereinafter, the metal particle detection device 200 will be described in more detail with reference to FIGS. 2, 3, 4a and 4b.

FIG. 2 is a block diagram for describing the configuration of a metal particle detection device according to an embodiment of this document.

Referring to FIG. 2, the metal particle detection device 200 according to an embodiment of this document may include a first capacitance sensor 210, a second capacitance sensor 220, a recovery unit 230, and a processor 240.

According to an embodiment, the first capacitance sensor 210 may acquire a first capacitance value corresponding to a fluid moving in a predetermined direction on a flow path. Specifically, the first capacitance sensor 210 may include electrodes and may measure a capacitance value corresponding to a fluid between the electrodes. When particles are contained in the fluid on the flow path, a dielectric constant of the fluid changes, and thus the capacitance value changes compared to a capacitance value corresponding to a fluid without particles. Accordingly, the first capacitance sensor 210 may acquire a first capacitance value corresponding to a fluid containing first metal particles and second metal particles.

According to an embodiment, the second capacitance sensor 220 may acquire a second capacitance value corresponding to a fluid moving in a predetermined direction on the flow path. Specifically, the second capacitance sensor 220 may include electrodes and may measure a capacitance value corresponding to a fluid between the electrodes. As described below, the second capacitance sensor 220 may acquire the second capacitance value corresponding to a fluid from which the first metal particles are removed by the recovery unit 230 and which contains the second metal particles.

According to an embodiment, the recovery unit 230 may be positioned between the first capacitance sensor 210 and the second capacitance sensor 220 to recover the first metal particles among the metal particles contained in the fluid. Specifically, the recovery unit 230 may include a magnet, and the first metal particles may contain iron metal particles. Therefore, the recovery unit 230 may recover the first metal particles among the metal particles that have passed through the first capacitance sensor 210.

According to an embodiment, the first capacitance sensor 210 and the second capacitance sensor 220 may be positioned apart from each other by a predetermined distance. Specifically, the distance between the first capacitance sensor 210 and the second capacitance sensor 220 may be determined based on the recovery intensity of the recovery unit 230. For example, the first capacitance sensor 210 and the second capacitance sensor 220 may be positioned apart by a distance determined based on the magnetic force of the magnet included in the recovery unit 230.

According to an embodiment, the metal particle detection device 200 may further include a removal unit (not shown). Specifically, when an amount of the first metal particles exceeds a recovery threshold value, the removal unit may remove the first metal particles from the recovery unit 230. For example, when the amount of the first metal particles exceeds the recovery threshold value of the recovery unit 230, the first metal particles move toward the second capacitance sensor 220 without being recovered from the fluid, and thus the metal particle detection device 200 may further include the removal unit to remove the first metal particles from the recovery unit 230.

According to an embodiment, the metal particle detection device 200 may include a memory (not shown). Specifically, the memory may store at least one instruction for performing the metal particle detection method according to an embodiment of this document. In addition, the memory may store data input to the processor 240 and/or an operation result of the processor 240.

According to various embodiments, the memory may include a volatile memory and/or a non-volatile memory. For example, the volatile memory may include at least one of static RAM (SRAM), dynamic RAM (DRAM), synchronous DRAM (SDRAM), and double date rate SDRAM (DDR SDRAM). In addition, the non-volatile memory may include at least one of ROM, programmable ROM (PROM), erasable programmable ROM (EPROM), electrically erasable programmable ROM (EEPROM), flash memory, magnetic disk, and optical disk.

According to an embodiment, the processor 240 may execute at least one instruction stored in the memory. For example, the processor 240 may include at least one of a central processing unit (CPU), a microcontroller unit (MCU), a digital signal processor (DSP), a field-programmable gate array (FPGA), and an application-specific integrated circuit (ASIC). In addition, the processor 240 may be configured in one or more numbers. In addition, for example, the processor 240 may be configured as any one of a single core processor, a multi-core processor, and a multi-processor system.

According to an embodiment, the processor 240 may calculate a measurement cycle for measuring the first capacitance value and the second capacitance value based on a flow rate of the fluid moving in a predetermined direction on the flow path. Specifically, the processor 240 may calculate the time it takes for the fluid to pass through the flow path based on the flow rate of the fluid, and may calculate the measurement cycle for measuring the first capacitance value and the second capacitance value based on this. For example, when the flow rate is 2 m/s and the length of the flow path is 1 m, it takes 0.5 seconds for the fluid to pass through the flow path, and thus the processor 240 may calculate the measurement cycle to be 0.2 seconds, which is shorter than 0.5 seconds.

According to an embodiment, the processor 240 may perform preprocessing on the first capacitance value and the second capacitance value. Specifically, the processor 240 may correct the first capacitance value and the second capacitance value based on the capacitance value when there are no particles in the fluid on the flow path.

In addition, according to an embodiment, the processor 240 may preprocess the first capacitance value and the second capacitance value by applying a moving average to each of the first and second capacitance values. Specifically, the processor 240 may calculate a moving average of each of the first capacitance value and the second capacitance value by applying an appropriate window size to the first and second capacitance values. Accordingly, the processor 240 may detect the first metal particles and the second metal particles based on the first capacitance value and the second capacitance value to which the moving average is applied.

According to an embodiment, the processor 240 may detect the first metal particles and the second metal particles contained in the fluid based on the first capacitance value and the second capacitance value. Specifically, the processor 240 may detect the first metal particles and the second metal particles, respectively, by calculating the first capacitance value and the second capacitance value acquired at a constant measurement cycle. For example, the processor 240 may calculate the number of first metal particles and the number of second metal particles by calculating the first capacitance value and the second capacitance value, respectively.

According to one embodiment, the second metal particles may be metal particles of a different type than the first metal particles. For example, when the first metal particles contain iron metal particles, the second metal particles may contain non-ferrous metal particles.

According to an embodiment, the processor 240 may calculate a first standardized value and a second standardized value that respectively correspond to the first capacitance value and the second capacitance value. Specifically, the first standardized value may include a z-score calculated based on the first capacitance value. In addition, the second standardized value may include a z-score calculated based on the second capacitance value.

According to an embodiment, the processor 240 may calculate a total count corresponding to an amount of metal particles containing the first metal particles and the second metal particles based on the first capacitance value. Specifically, the processor may calculate the total count based on the first standardized value. Here, the total count may be a value obtained by counting cases where the first standardized value is greater than or equal to a threshold value. For example, when the threshold value is 2, the processor 240 may count data having the first standardized value of 2 or greater among the first capacitance values to calculate the total count.

According to an embodiment, the processor 240 may calculate a second count corresponding to the amount of the second metal particles based on the second capacitance value. Specifically, the processor 240 may calculate the second count based on the second standardized value. Here, the second count may be a value obtained by counting cases where the second standardized value is greater than or equal to the threshold value. For example, when the threshold value is 2, the processor 240 may count data having the second standardized value of 2 or greater among the second capacitance values to calculate the second count.

According to an embodiment, the processor 240 may calculate a first count corresponding to an amount of the first metal particles based on the total count and the second count. Specifically, the processor 240 may calculate the first count by subtracting the second count from the total count. For example, if the total count is 20 and the second count is 10, the processor 240 may calculate 10, which is a value obtained by subtracting the second count from the total count, as the first count.

According to an embodiment, the processor 240 may calculate the number of first metal particles based on the first count, and calculate the number of second metal particles based on the second count. Specifically, the processor 240 may calculate the number of first metal particles based on the assumption that the first count and the number of first metal particles have a 1:1 correspondence relationship. In addition, the number of second metal particles may be calculated based on the assumption that the second count and the number of second metal particles have a 1:1 correspondence relationship. The above-described correspondence relationship between the first count and the number of first metal particles and the correspondence relationship between the second count and the number of second metal particles are examples, and thus, this document is not limited thereto.

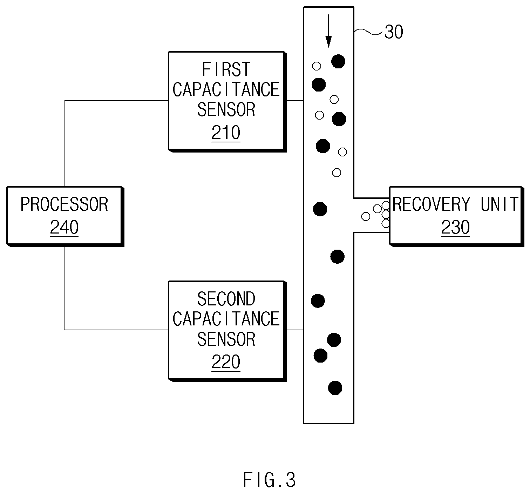

FIG. 3 is a diagram illustrating an application example of a metal particle detection device according to an embodiment of this document.

Referring to FIG. 3, the metal particle detection device 200 according to an embodiment may be disposed on a flow path 30 of process equipment. Specifically, the first capacitance sensor 210 and the second capacitance sensor 220 of the metal particle detection device 200 may be directly disposed on the flow path 30 at a predetermined distance from each other. Accordingly, the first capacitance sensor 210 may acquire a first capacitance value corresponding to a fluid moving in a predetermined direction on the flow path 30, and the second capacitance sensor 220 may acquire a second capacitance value corresponding to the fluid that has passed through the flow path 30 in an area where the first capacitance sensor 210 is positioned.

According to an embodiment, the recovery unit 230 may be positioned between the first capacitance sensor 210 and the second capacitance sensor 220. Specifically, the recovery unit 230 may be directly disposed inside or outside the flow path 30 between the first capacitance sensor 210 and the second capacitance sensor 220. Accordingly, the recovery unit 230 may recover the first metal particles contained in the fluid.

According to an embodiment, the first capacitance sensor 210 may acquire a first capacitance value corresponding to the fluid containing the first metal particles and the second metal particles. In addition, the second capacitance sensor 220 may acquire a second capacitance value corresponding to the fluid from which the first metal particles are recovered by the recovery unit 230.

According to an embodiment, the first capacitance sensor 210 and the second capacitance sensor 220 may be connected to the processor 240. Accordingly, the processor 240 may acquire the first capacitance value and the second capacitance value acquired by the first capacitance sensor 210 and the second capacitance sensor 220 as input data. In addition, the processor 240 may calculate a measurement cycle based on the flow rate of the fluid, so that the first capacitance sensor 210 and the second capacitance sensor 220 acquire the first capacitance value and the second capacitance value, respectively, based on the measurement cycle.

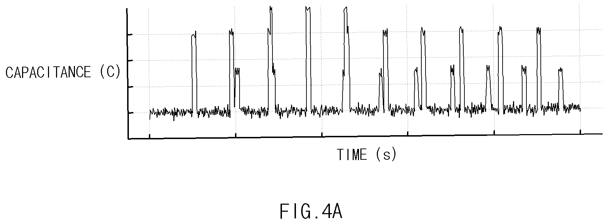

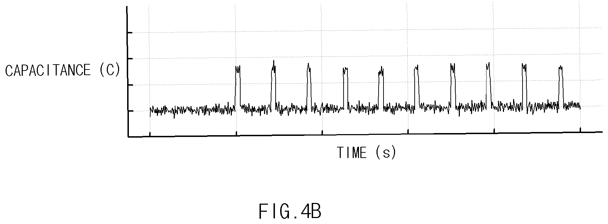

FIG. 4a is a diagram for describing an example of first capacitance values according to an embodiment of this document. FIG. 4b is a diagram for describing an example of second capacitance values according to an embodiment of this document.

Referring to FIG. 4a, the first capacitance sensor 210 may acquire first capacitance values corresponding to the fluid on the flow path. Specifically, the first capacitance sensor 210 may acquire the first capacitance values that fluctuate due to first metal particles and second metal particles contained in the fluid. For example, when the first metal particles and the second metal particles pass through the first capacitance sensor, the first capacitance values may fluctuate and appear as peaks.

In an embodiment, the processor 240 may calculate a first standardized value for each of the first capacitance values. Specifically, the processor 240 may calculate the first standardized value including a z-score for each of the first capacitance values. In addition, the processor 240 may calculate a total count by counting the number of peaks when the first standardized value is greater than or equal to a threshold value, i.e., when the first capacitance value changes significantly by a certain level or more. For example, in FIG. 4a, the processor 240 may count the number of peaks where the first standardized value is greater than or equal to the threshold value and calculate the total count as 20. In this case, the total count may correspond to the amount of metal particles containing both the first metal particles and the second metal particles.

Referring to FIG. 4b, the second capacitance sensor 220 may acquire second capacitance values corresponding to the fluid on the flow path. Specifically, the second capacitance sensor 220 may acquire the second capacitance values corresponding to the fluid from which the first metal particles have been removed by the recovery unit 230. Accordingly, the second capacitance sensor 220 may acquire the second capacitance values that fluctuate due to the second metal particles contained in the fluid. For example, when the second metal particles pass through the second capacitance sensor, the second capacitance values may fluctuate and appear as peaks.

According to an embodiment, the processor 240 may calculate a second standardized value for each of the second capacitance values. Specifically, the processor 240 may calculate the second standardized value including a z-score for each of the second capacitance values. In addition, the processor 240 may calculate a second count by counting the number of peaks when the second standardized value is greater than or equal to the threshold value, i.e., when the second capacitance value changes significantly by a certain level or more. For example, in FIG. 4b, the processor 240 may count the number of peaks where the second standardized value is greater than or equal to the threshold value and calculate the second count as 10. In this case, the second count may correspond to the amount of the second metal particles.

In an embodiment, the processor 240 may calculate a first count based on the total count and the second count. Specifically, the total count may be a value obtained by adding the first count corresponding to the amount of the first metal particles and the second count corresponding to the amount of the second metal particles. For example, in FIGS. 4a and 4b, the processor 240 may calculate the first count as 10 by subtracting the second count from the total count. Accordingly, the processor 240 may calculate the number of first metal particles and the number of second metal particles as 10, respectively, based on the assumption that each of the first count and the second count has a 1:1 correspondence relationship with the number of first metal particles and the number of second metal particles, respectively.

The metal particle detection device 200 disclosed in this document acquires capacitance values by a plurality of capacitance sensors, and thus it has the effect of being able to more accurately calculate the amount of metal particles based on this. In addition, the metal particle detection device 200 recovers the first metal particles containing iron metal particles by the recovery unit 230, and thus it has the effect of being able to calculate the amount of iron metal particles and the amount of non-ferrous metal particles, respectively.

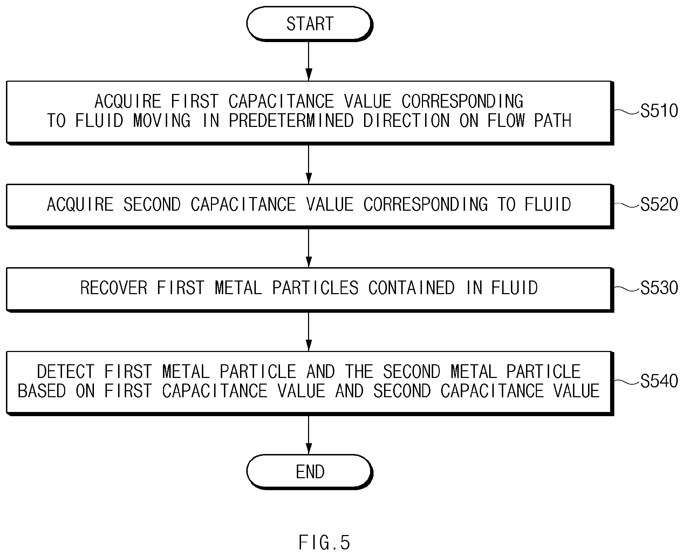

FIG. 5 is a flowchart for describing a metal particle detection method according to an embodiment of this document.

Hereinafter, it is assumed that the metal particle detection device 200 of FIG. 2 performs each step of FIG. 5. Each of the steps in FIG. 5 may be performed sequentially, but they are not necessarily performed sequentially. For example, the order of each step may be changed, and a plurality of steps may be performed in parallel.

Referring to FIG. 5, in step S510, the metal particle detection device 200 may acquire a first capacitance value corresponding to a fluid moving in a predetermined direction on a flow path. For example, the metal particle detection device 200 may acquire the first capacitance value corresponding to the fluid moving in the predetermined direction on the flow path by the first capacitance sensor 210.

In step S520, the metal particle detection device 200 may acquire a second capacitance value corresponding to the fluid. For example, the metal particle detection device 200 may acquire the second capacitance value corresponding to the fluid by the second capacitance sensor 220.

In step S530, the metal particle detection device 200 may recover first metal particles contained in the fluid. For example, the metal particle detection device 200 may recover the first metal particles by the recovery unit 230. In this case, the recovery unit 230 may include a magnet, and the first metal particles may contain iron metal particles.

In step S540, the metal particle detection device 200 may detect the first metal particles and the second metal particles based on the first capacitance value and the second capacitance value. Specifically, the metal particle detection device 200 may calculate a first standardized value and a second standardized value, respectively, based on the first capacitance value and the second capacitance value. Accordingly, the metal particle detection device 200 may calculate the amount of first metal particles and the amount of second metal particles, respectively, based on the first standardized value and the second standardized value.

For example, the metal particle detection device 200 may calculate a total count corresponding to the amount of metal particles containing the first metal particles and the second metal particles based on the first standardized value. Specifically, the metal particle detection device 200 may determine whether the first standardized value including a z-score for the first capacitance value is greater than or equal to a threshold value, and may calculate a total count obtained by counting cases where the first standardized value is greater than or equal to the threshold value.

For example, the metal particle detection device 200 may calculate a second count corresponding to the amount of the second metal particles based on the second standardized value. Specifically, the metal particle detection device 200 may determine whether the second standardized value including a z-score for the second capacitance value is greater than or equal to the threshold value, and may calculate the second count obtained by counting cases where the second standardized value is greater than or equal to the threshold value.

For example, the metal particle detection device 200 may calculate a first count corresponding to the first metal particles based on the total count and the second count. Specifically, the metal particle detection device 200 may calculate the first count by subtracting the second count from the total count.

For example, the metal particle detection device 200 may calculate the number of first metal particles based on the first count and calculate the number of second metal particles based on the second count. Specifically, the metal particle detection device 200 may calculate the number of first metal particles based on the assumption that the first count and the number of first metal particles have a 1:1 correspondence relationship. In addition, the metal particle detection device 200 may calculate the number of second metal particles based on the assumption that the second count and the number of second metal particles have a 1:1 correspondence relationship.

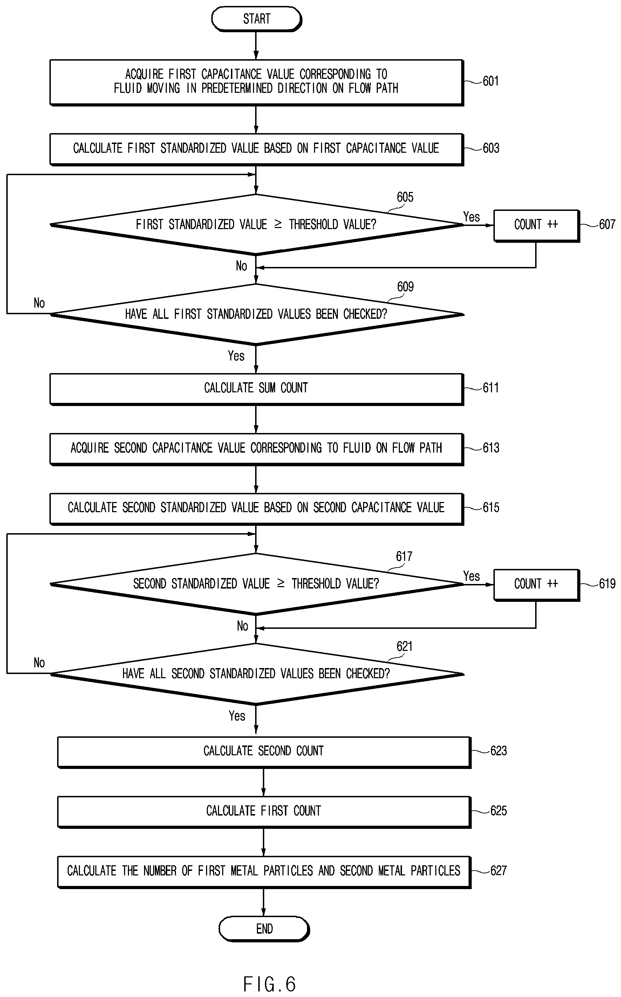

FIG. 6 is a flowchart for describing a metal particle detection method according to an embodiment of this document.

Hereinafter, it is assumed that the processor 240 of the metal particle detection device 200 of FIG. 2 performs each operation of FIG. 6. Each of the operations of FIG. 6 may be sequentially performed, but they are not necessarily performed sequentially. For example, the order of each operation may be changed, and a plurality of operations may be performed in parallel.

Referring to FIG. 6, in operation 601, the processor 240 may acquire a first capacitance value corresponding to a fluid moving in a predetermined direction on a flow path. Specifically, the processor 240 may acquire the first capacitance value acquired by the first capacitance sensor 210 as input data. When the first capacitance value is acquired, the processor 240 may perform operation 603.

In operation 603, the processor 240 may calculate a first standardized value based on the first capacitance value. For example, the processor 240 may calculate the first standardized value including a z-score calculated based on the first capacitance value. When the first standardized value is calculated, the processor 240 may perform operation 605.

In operation 605, the processor 240 may determine whether the first standardized value is greater than or equal to a threshold value. For example, when the first standardized value is greater than or equal to the threshold value, the processor 240 may perform operation 607. In addition, for example, when the first standardized value is less than the threshold value, the processor 240 may perform operation 609.

In operation 607, the processor 240 may increase the count by 1 when the first standardized value is greater than or equal to the threshold value. When the count is increased by 1, the processor 240 may perform operation 609.

In operation 609, the processor 240 may determine whether it has been checked that all first standardized values are greater than or equal to the threshold value. For example, when it is not checked whether all first standardized values are greater than or equal to the threshold, the processor 240 may perform operation 605. In addition, for example, when it is checked whether all first standardized values are greater than or equal to the threshold value, the processor 240 may perform operation 611.

In operation 611, the processor 240 may calculate a total count when it is determined whether all first standardized values are greater than or equal to the threshold value. Specifically, the total count may be a value obtained by counting cases where the first standardized value is greater than or equal to the threshold value. When the total count is calculated, the processor 240 may perform operation 613.

In operation 613, the processor 240 may acquire a second capacitance value corresponding to the fluid on the flow path. Specifically, the processor 240 may acquire the second capacitance value acquired by the second capacitance sensor 220 as input data. Here, the second capacitance sensor 220 may measure the second capacitance value corresponding to the fluid from which the first metal particles are removed by the recovery unit 230. When the second capacitance value is acquired, the processor 240 may perform operation 615.

In operation 615, the processor 240 may calculate a second standardized value based on the second capacitance value. For example, the processor 240 may calculate the second standardized value including the z-score calculated based on the second capacitance value. When the second standardized value is calculated, the processor 240 may perform operation 617.

In operation 617, the processor 240 may determine whether the second standardized value is greater than or equal to a threshold value. For example, when the second standardized value is greater than or equal to the threshold value, the processor 240 may perform operation 619. In addition, for example, when the second standardized value is less than the threshold value, the processor 240 may perform operation 621.

In operation 619, the processor 240 may increase the count by 1 when the second standardized value is greater than or equal to the threshold value. When the count is increased by 1, the processor 240 may perform operation 621.

In operation 621, the processor 240 may determine whether it has been checked that all second standardized values are equal to or greater than the threshold value. For example, when it is not checked whether all second standardized values are greater than or equal to the threshold, the processor 240 may perform operation 617. In addition, for example, when it is checked whether all second standardized values are greater than or equal to the threshold, the processor 240 may perform operation 623.

In operation 623, the processor 240 may calculate a second count when it is determined whether all second standardized values are greater than or equal to the threshold value. Specifically, the second count may be a value obtained by counting cases where the second standardized value is greater than or equal to the threshold value. When the second count is calculated, the processor 240 may perform operation 625.

In operation 625, the processor 240 may calculate a first count based on the total count and the second count. Specifically, the processor 240 may calculate the first count by subtracting the second count from the total count. When the first count is calculated, the processor 240 may perform operation 627.

In operation 627, the processor 240 may calculate the number of first metal particles and the number of second metal particles, respectively. Specifically, the processor 240 may calculate the number of first metal particles based on the first count and calculate the number of second metal particles based on the second count. For example, the processor 240 may calculate the number of first metal particles based on the assumption that the first count and the number of first metal particles have a 1:1 correspondence relationship. In addition, for example, processor 240 may calculate the number of second metal particles based on the assumption that the second count and the number of second metal particles have a 1:1 correspondence relationship.

In the above, even though all the components constituting the embodiments disclosed in this document have been described as being combined as one or operating in combination, the embodiments disclosed in this document are not necessarily limited to such embodiments. That is, within the scope of the purpose of the embodiments disclosed in this document, all of the components may be selectively combined and operated in one or more combinations.

In addition, the terms "include," "configure," or "have" described above, unless specifically stated to the contrary, mean that the corresponding component may be included, and therefore should be interpreted as being able to further include other components rather than excluding other components. All terms including technical or scientific terms have the same meaning as commonly understood by a person skilled in the art to which the embodiments disclosed in this document belong, unless otherwise defined. Terms commonly used, such as terms defined in the dictionary, should be interpreted as being consistent with the contextual meaning of the relevant technology, and should not be interpreted in an idealized or overly formal sense unless clearly defined in this document.

The above-mentioned disclosure outlines the features of several embodiments so that those skilled in the art may better understand aspects of the present disclosure. Those skilled in the art will understand that the present disclosure may be easily used as a basis for designing or changing different structures to perform the same purpose or achieve the same advantages of embodiments introduced in this document. Furthermore, those skilled in the art will recognize that such equivalent configurations do not depart from the scope of the present disclosure, and that various changes, substitutions, and modifications may be made in this specification without departing from the scope of the present disclosure.

Although the document has been described above with limited embodiments and drawings, this document is not limited thereto, and various implementations are possible within the technical idea of this document and the scope equivalent to the claims described below by a person having ordinary knowledge in the technical field to which this document pertains.

## Claims

1. A metal particle detection device, comprising:
a first capacitance sensor configured to acquire a first capacitance value corresponding to a fluid moving in a predetermined direction on a flow path;
a second capacitance sensor configured to acquire a second capacitance value corresponding to the fluid;
a recovery unit positioned between the first capacitance sensor and the second capacitance sensor and configured to recover first metal particles contained in the fluid; and
a processor configured to detect the first metal particles and second metal particles different from the first metal particles contained in the fluid based on the first capacitance value and the second capacitance value.

2. The metal particle detection device of claim 1, wherein the processor is configured to:
calculate a total count corresponding to an amount of metal particles containing the first metal particles and the second metal particles based on the first capacitance value;
calculate a second count corresponding to an amount of the second metal particles based on the second capacitance value; and
calculate a first count corresponding to an amount of the first metal particles based on the total count and the second count.

3. The metal particle detection device of claim 2, wherein the processor is configured to:
calculate a first standardized value and a second standardized value corresponding to the first capacitance value and the second capacitance value, respectively;
wherein the total count is calculated based on the first standardized value; and
the second count is calculated based on the second standardized value.

4. The metal particle detection device of claim 2, wherein the processor is configured to:
calculate the number of the first metal particles based on the first count; and
calculate the number of the second metal particles based on the second count.

5. The metal particle detection device of claim 1, wherein the recovery unit includes a magnet, and
the first metal particles contain iron metal particles.

6. The metal particle detection device of claim 1, further comprising:
a removal unit configured to remove the first metal particles from the recovery unit when an amount of the first metal particles exceeds a recovery threshold value.

7. The metal particle detection device of claim 1, wherein the processor is configured to calculate a measurement cycle for measuring the first capacitance value and the second capacitance value based on a flow rate of the fluid.

8. A metal particle detection method, comprising:
an operation of acquiring a first capacitance value corresponding to a fluid moving in a predetermined direction on a flow path;
an operation of acquiring a second capacitance value corresponding to the fluid;
an operation of recovering first metal particles contained in the fluid; and
an operation of detecting the first metal particles and second metal particles different from the first metal particles contained in the fluid based on the first capacitance value and the second capacitance value.

9. The metal particle detection method of claim 8, wherein the operation of detecting the first metal particles and the second metal particles includes:
an operation of calculating a total count corresponding to an amount of metal particles containing the first metal particles and the second metal particles based on the first capacitance value;
an operation of calculating a second count corresponding to an amount of the second metal particles based on the second capacitance value; and
an operation of calculating a first count corresponding to an amount of the first metal particles based on the total count and the second count.

10. The metal particle detection method of claim 9, further comprising: an operation of calculating a first standardized value and a second standardized value corresponding to the first capacitance value and the second capacitance value, respectively,
wherein the total count is calculated based on the first standardized value, and
the second count is calculated based on the second standardized value.

11. The metal particle detection method of claim 9, further comprising:
an operation of calculating the number of the first metal particles based on the first count; and
an operation of calculating the number of the second metal particles based on the second count.

12. The metal particle detection method of claim 8, wherein the first metal particles contain iron metal particles and are recovered by a magnet.

13. The metal particle detection method of claim 8, further comprising:
an operation of removing the first metal particles when an amount of the first metal particles exceeds a recovery threshold value.

14. The metal particle detection method of claim 8, further comprising:
an operation of calculating a measurement cycle for measuring the first capacitance value and the second capacitance value based on a flow rate of the fluid.
